Europäisches Patentamt

European Patent Office

Office européen des brevets

(11) Veröffentlichungsnummer : **0 133 479**
**B1**

(12) **EUROPÄISCHE PATENTSCHRIFT**

(45) Veröffentlichungstag der Patentschrift :
23.03.88

(21) Anmeldenummer : 84107964.3

(22) Anmeldetag : 07.07.84

(51) Int. Cl.⁴ : **G 01 F 1/68**, H 01 C 7/02

(54) Vorrichtung zur Messung der Masse eines strömenden Mediums.

(30) Priorität : 10.08.83 DE 3328852

(43) Veröffentlichungstag der Anmeldung :
27.02.85 Patentblatt 85/09

(45) Bekanntmachung des Hinweises auf die Patenterteilung : 23.03.88 Patentblatt 88/12

(84) Benannte Vertragsstaaten :
**AT DE FR GB**

(56) Entgegenhaltungen :
**EP-A- 0 069 253**
**DE-A- 2 919 433**
**DE-A- 3 040 448**
**DE-A- 3 100 852**
**GB-A- 1 391 375**
**US-A- 4 264 961**
**US-A- 4 369 656**

(73) Patentinhaber : **ROBERT BOSCH GMBH**
**Postfach 50**
**D-7000 Stuttgart 1 (DE)**

(72) Erfinder : **Sumal, Jaihind Singh**
**Im kleinen Feldle 12**
**D-7143 Vaihingen-Enz/Ensingen (DE)**

## Beschreibung

### Stand der Technik

Die Erfindung geht aus von einer Vorrichtung zur Messung der Masse eines strömenden Mediums nach der Gattung des unabhängigen Anspruches. Es ist bereits eine Vorrichtung zur Messung der Masse strömender Medien bekannt (EP-A1-69 253), bei der eine temperaturabhängige Widerstandsschicht mit ihren einander gegenüberliegenden Enden eine weitere auf dem Träger aufgebrachte Schicht überragt und in diesem Bereich mit je einem Anschluß verlötet ist, so daß das Lot nicht nur zur Herstellung der elektrischen Verbindung dient, sondern auch den Träger mit den Schichten an den Anschlüssen halten muß und dabei die Gefahr besteht, daß bei Lötfehlern Erschütterungen zu Meßfehlern oder gar zur Zerstörung der Vorrichtung führen. Andererseits ergibt sich durch diese Ausgestaltung ein guter Wärmeübergang von der temperaturabhängigen Widerstandsschicht über das Lot zu den Anschlüssen, was zu einer Verringerung der Ansprechgeschwindigkeit der Vorrichtung auf Änderungen der Strömungsgeschwindigkeit des Mediums führt. Anschlüsse und Aufstromseite der Vorrichtung sind mit einer Glasschicht versehen.

Bekannt ist ebenfalls eine Vorrichtung (DE-A-29 19 433), bei der als Träger eine Folie aus Kunststoff dient und die sich längs der Mediumströmung erstreckt und auf der mäanderförmig verlaufende Widerstandsschichten und Leiterbahnen angeordnet sind. Zwischen der nicht als elektrischer Anschluß dienenden Halterung und den Meßwiderständen soll eine optimale thermische Entkopplung erhalten werden. Der elektrische Anschluß erfolgt durch zusätzliche angelötete Drähte.

### Vorteile der Erfindung

Die erfindungsgemäße Vorrichtung mit den Merkmalen des unabhängigen Anspruches hat demgegenüber den Vorteil einer sicheren Kontaktierung der temperaturabhängigen Widerstandsschichten bei möglichst hoher Ansprechgeschwindigkeit der Vorrichtung auf Änderungen der Strömungsgeschwindigkeit und möglichst großer Korrosionsbeständigkeit, so daß eine lange Funktionsfähigkeit der Vorrichtung gewährleistet ist.

Durch die in den abhängigen Ansprüchen aufgeführten Maßnahmen sind vorteilhafte Weiterbildungen und Verbesserungen der im unabhängigen Anspruch angegebenen Vorrichtung möglich. Besonders vorteilhaft ist es, die auf dem Träger aufgebrachten Verbindungsschichten lang auszuführen. Vorteilhaft ist es ebenfalls, im Bereich der Verbindungsschichten den Querschnitt des Trägers zumindest teilweise gegenüber dem Querschnitt des Trägers im Bereich der temperaturabhängigen Widerstandsschicht zu verringern.

### Zeichnung

Ausführungsbeispiele der Erfindung sind in der Zeichnung vereinfacht dargestellt und in der nachfolgenden Beschreibung näher erläutert. Es zeigen Figur 1 ein erstes Ausführungsbeispiel einer erfindungsgemäßen Vorrichtung in Seitenansicht, Figur 2 eine Draufsicht auf ein zweites Ausführungsbeispiel einer erfindungsgemäßen Vorrichtung und Figur 3 ein drittes Ausführungsbeispiel einer erfindungsgemäßen Vorrichtung in Teildarstellung.

### Beschreibung der Ausführungsbeispiele

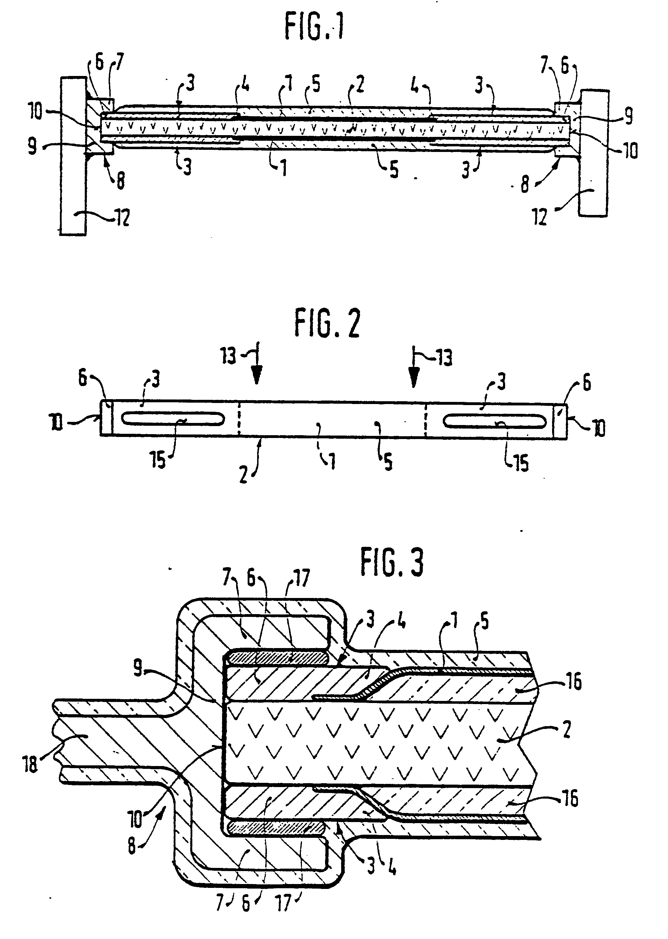

Bei der in der Figur 1 dargestellten Vorrichtung zur Messung der Masse eines strömenden Mediums verläuft die Strömungsrichtung des Mediums senkrecht zur Zeichenebene. Die Vorrichtung ist beispielsweise im Ansaugrohr einer nicht dargestellten Brennkraftmaschine angeordnet und mißt mit mindestens einem temperaturabhängigen Widerstand 1, der in Form eines Filmes oder einer Schicht auf einem beispielsweise plattenförmigen Träger 2 aufgebracht ist, die Masse der von der Brennkraftmaschine angesaugten Luft. Hierfür wird der temperaturabhängige Widerstand 1 durch eine nicht dargestellte elektronische Regelschaltung in bekannter Weise so mit Strom versorgt, daß er eine konstante Temperatur einnimmt. Bei der Verwendung einer derartigen Vorrichtung zur Messung der Ansaugluftmasse einer Brennkraftmaschine werden an eine derartige Vorrichtung sehr hohe Ansprüche bezüglich der Meßgeschwindigkeit, der Meßgenauigkeit und der Funktionsdauer gestellt, da einerseits bei rasch wechselnden angesaugten Luftmassen diese Änderungen der Luftmasse durch die Vorrichtung möglichst schnell erfaßt werden müssen, um die zuzuführende Kraftstoffmenge entsprechend anzupassen und andererseits die Funktionsfähigkeit der Vorrichtung mindestens die Lebensdauer der Kraftstoffversorgungsanlage der Brennkraftmaschine erreichen muß. Der Träger 2 kann beispielsweise aus einem Keramikplättchen bestehen, das ca. 250 μm dick, 2 mm in Strömungsrichtung breit und ca. 15 mm quer zur Strömungsrichtung lang ist. Um den hohen Ansprüchen bezüglich der Meßgeschwindigkeit und der Meßgenauigkeit zu genügen, ist das Wärmeaufnahmevermögen von Träger 2 und temperaturabhängigem Widerstand 1 möglichst klein gehalten und außerdem dafür gesorgt, daß über den Träger 2 und den temperaturabhängigen Widerstand 1 möglichst wenig Wärme abgeführt wird, so daß sich eine möglichst kurze Ansprechzeit auf Änderungen der Masse der Mediumströmung ergibt. Temperaturabhängige Widerstandsschichten 1 können beiderseits des Trägers in Strömungsrichtung verlaufend angeordnet sein und werden gemäß der Erfindung teilweise durch auf dem Träger 2 aufgebrachte und an gegenüberliegenden Seiten der temperaturabhängigen Widerstandsschicht 1 angeordnete Verbindungsschichten 3 bei 4 teilweise überlappt unter Bildung einer elektrisch leitenden Verbindung. Die elektrisch leitenden Verbindungsschichten 3 haben einen geringen elektrischen Widerstand, so daß sie sich im stromdurchflossenen Zustand nicht selbst erwärmen. Die temperaturabhängig arbeitende Widerstandsschicht 1 und die Verbindungsschichten 3 sind mit einer dünnen Glasschicht 5 bis auf je einen Kontaktabschnitt 6 an den der temperaturabhängigen Widerstandsschicht 1 abgewandten Enden der Verbindungsschichten 3, die von klauenförmig abgewinkelten Befestigungsabschnitten 7 je eines elektrischen Anschlusses 8 überragt werden und mit diesen elektrisch leitend beispielsweise durch Verlöten oder Verschweißen verbunden sind, bedeckt. Die elektrischen Anschlüsse 8 sind fluchtend zueinander ausgerichtet und liegen mit einem Abstützabschnitt 9 einander gegenüberliegend an je einer Stirnfläche 10 des Trägers 2 an. Die elektrischen Anschlüsse 8 können als separate Teile ausgebildet sein und mit je einem Haltekörper 12 verbunden werden, beispielsweise durch Verlöten oder Verschweißen, oder sie können in nicht dargestellter Weise Teil je eines Haltekörpers 12 sein, indem sie beispielsweise durch eine Verformung des Haltekörpers 12 die Kontaktabschnitte 6 klauenförmig umgreifen und an den Stirnflächen 10 des Trägers 2 anliegen, so daß über die Befestigungsabschnitte 7 auf die Kontaktabschnitte 6 keine Schubkräfte ausgeübt werden.

Wie auch in der Figur 2 dargestellt ist, ist die Länge der temperaturabhängigen Widerstandsschicht 1 quer zur Mediumströmung 13 annähernd halb so groß oder kleiner als die Summe der Längen der zugehörigen Verbindungsschichten 3. Da der aus Keramik gefertigte Träger 2 ein schlechter Wärmeleiter ist, wird über die relativ lang ausgebildeten und die Verbindungsschichten 3 tragenden Bereichen des Trägers 2 nur begrenzt Wärme abgeführt, wodurch die Ansprechgeschwindigkeit der Vorrichtung bei Änderungen der Strömungsgeschwindigkeit erhöht wird. Eine Erhöhung der Ansprechgeschwindigkeit der Vorrichtung auf Änderungen der Masse des strömenden Mediums läßt sich auch dadurch erreichen, daß beispielsweise durch Ausnehmungen 15 der Querschnitt des Trägers 2 und jeder Verbindungsschicht 3 im Bereich der Verbindungsschichten 3 zumindest teilweise gegenüber dem Querschnitt des Trägers 2 im Bereich des temperaturabhängigen Widerstandes 1 verringert ist, so daß sich ebenfalls eine verringerte Wärmeleitung zu den Stirnflächen 10 des Trägers 2 ergibt. Die elektrisch leitenden Verbindungen zwischen den Kontaktabschnitten 6 und den Befestigungsabschnitten 7 der elektrischen Anschlüsse 8 liegen bei diesen Ausbildungen an den relativ kühleren Enden des Trägers 2, so daß sie unempfindlicher gegenüber Korrosion sind und größere Toleranzen gewählt werden können.

Bei dem in Figur 3 dargestellten Ausführungsbeispiel einer erfindungsgemäßen Vorrichtung sind die gegenüber den bisherigen Ausführungsbeispielen gleichwirkenden Teile durch die gleichen Bezugszeichen gekennzeichnet. Abweichend von den bisherigen Ausführungsbeispielen ist zwischen dem Träger 2 und der temperaturabhängigen Widerstandsschicht 1 ebenfalls eine dünne Glasschicht 16 angeordnet, die jedoch quer zur Strömungsrichtung des Mediums kürzer als die temperaturabhängige Widerstandsschicht 1 ausgebildet ist. Die Verbindungsschichten 3 überlappen bei 4 die temperaturabhängigen Widerstände 1 und sind in Kontaktabschnitten 6 durch eine Verlötung oder Verschweißung 17 mit den klauenförmig verlaufenden Befestigungsabschnitten 7 der elektrischen Anschlüsse 8 verbunden. Temperaturabhängige Widerstandsschicht 1, Verbindungsschichten 3 und zumindest teilweise die elektrischen Anschlüsse 8 können von der gemeinsamen dünnen Glasschicht 5 bedeckt sein, die neben einer Erhöhung der Korrosionsbeständigkeit auch eine gleichmäßigere Übertragung der Temperatur des strömenden Mediums auf die temperaturabhängige Widerstandsschicht 1 bewirkt. Jeder elektrische Anschluß 8 kann einen Haltesteg 18 aufweisen, welcher einem nicht dargestellten Haltekörper 12 zugewandt und mit diesem elektrisch leitend verbunden ist.

**Patentansprüche**

1. Vorrichtung zur Messung der Masse eines strömenden Mediums mit mindestens einem in der Mediumströmung quer zur Strömungsrichtung angeordneten, als langgestreckte Schicht ausgebildeten temperaturabhängigen Widerstand (1), der auf einem langgestreckten plattenförmigen Träger (2) gelagert, mit einer dünnen Glasschicht (5) bedeckt und mit mindestens zwei elektrischen Anschlüssen (8) elektrisch leitend verbunden ist, dadurch gekennzeichnet, daß an den einander gegenüberliegenden Enden der temperaturabhängigen Widerstandsschicht (1) unmittelbar auf dem Träger (2) Verbindungsschichten (3) aufgebracht sind, die die temperaturabhängige Widerstandsschicht (1) teilweise überlappen, elektrisch leitend mit dieser verbunden sind und einen derart geringen elektrischen Widerstand aufweisen, daß sie sich im stromdurchflossenen Zustand nicht selbst erwärmen, welche Verbindungsschichten (3) bis auf je einen Kontaktabschnitt (6) ebenfalls mit der dünnen Glasschicht (5) bedeckt sind und daß die Kontaktabschnitte (6) von klauenförmig abgewinkelten Befestigungsabschnitten (7) der Anschlüsse (8) gebildet sind, die an je einer Stirnfläche (10) des Trägers (2) anliegen, die Kontaktabschnitte (6) überragen und mit diesen elektrisch leitend verbunden sind.

2. Vorrichtung nach Anspruch 1, dadurch gekennzeichnet, daß die Länge der temperaturabhängigen Widerstandsschicht (1) quer zur Mediumströmungsrichtung (13) annähernd halb so groß oder kleiner ist, als die Summe der Längen der zugehörigen Verbindungsschichten (3) beiderseits der temperaturabhängigen Widerstandsschicht (1).

3. Vorrichtung nach Anspruch 2, dadurch gekennzeichnet, daß der Querschnitt jeweils des Trägers (2) und jeder Verbindungsschicht (3) im Bereich der Verbindungsschichten (3) zumindest teilweise gegenüber dem Querschnitt des Trägers (2) im Bereich der temperaturabhängigen Widerstandsschicht (1) verringert ist.

4. Vorrichtung nach Anspruch 1, dadurch gekennzeichnet, daß zwischen dem Träger (2) und der temperaturabhängigen Widerstandsschicht (1) eine dünne Glasschicht (16) vorgesehen ist, die quer zur Strömungsrichtung (13) kürzer ist als die temperaturabhängige Widerstandsschicht (1).

5. Vorrichtung nach Anspruch 1, dadurch gekennzeichnet, daß die die temperaturabhängige Widerstandsschicht (1) und die Verbindungsschichten (3) bedeckende Glasschicht (1) auch zumindest teilweise die elektrischen Anschlüsse (8) bedeckt.

## Claims

1. Device for measuring the mass of a flowing medium with at least one temperature-dependent resistance (1) arranged in the medium flow transversely to the flow direction and constructed as an elongate layer, which is mounted on an elongate laminar substrate (2), covered with a thin glass layer (5) and connected electrically conductively to at least two electrical connections (8), characterized in that connecting layers (3) are applied directly upon the substrate (2) at the mutually opposite ends of the temperature-dependent resistance layer (1), which partly overlap the temperature-dependent resistance layer (1), are connected electrically conductively thereto and exhibit such a low electrical resistance that they do not themselves heat up when flowed by the current, which connecting layers (3) are likewise covered by the thin glass layer (5) except for a respective contact section (6), and that the contact layers (6) are formed by fixing sections (7) angled in claw shape, of the connections (8), which each abut on an end face (10) of the substrate (2), overhang the contact sections (6) and are connected electrically conductively thereto.

2. Device according to Claim 1, characterized in that the lengths of the temperature-dependent resistance layer (1) transversely to the medium flow direction (13) is approximately half as great or smaller than the sum of the lengths of the associated connecting layers (3) on both sides of the temperature-dependent resistance layer (1).

3. Device according to Claim 2, characterized in that the respective cross-section of the substrate (2) and of each connecting layer (3) in the region of the connecting layers (3) is at least partly reduced relative to the cross-section of the substrate (2) in the region of the temperature-dependent resistance layer (1).

4. Device according to Claim 1, characterized in that a thin glass layer (16) which is shorter transversely to the flow direction (13) than the temperature-dependent resistance layer (1) is provided between the substrate (2) and the temperature-dependent resistance layer (1).

5. Device according to Claim 1, characterized in that the glass layer (5) which covers the temperature-dependent resistance layer (1) and the connecting layers (3) also at least partly covers the electrical connections (8).

## Revendications

1. Dispositif pour la mesure de la masse d'un fluide en écoulement, avec au moins une résistance (1) dépendante de la température, disposée dans l'écoulement de fluide, perpendiculairement au sens de l'écoulement, configurée comme une longue bande, qui est placée sur un long support (2), en forme de plateforme, recouverte d'une mince couche de verre (5) et raccordée avec au moins deux raccordements électriques (8), conducteurs électriquement, caractérisé en ce qu'aux extrémités opposées de la couche résistante (1) dépendante de la température, des couches de liaison (3) sont adjointes immédiatement sur le support (2) et qui recouvrent partiellement la couche résistante (1) dépendante de la température, reliée à celle-ci de manière électriquement conductrice et présentant une résistance électrique limitée de sorte à ce qu'elle ne s'échauffe pas toute seule à l'état traversé par le courant, lesquelles couches de liaison (3) sont également recouvertes de la mince couche de verre (5), jusqu'à une section de contact (6) pour chacune et en ce que les sections de contact (6) sont formées de sections de fixation (7) des raccordements (8), pliées en forme de griffes, qui appuient pour chacune sur une surface frontale (10) du support (2), émergent des sections de contact (6) et sont reliées avec celles-ci de manière électriquement conductrice.

2. Dispositif selon la revendication 1, caractérisé en ce que la longueur de la couche résistante (1) dépendante de la température, perpendiculairement au sens d'écoulement du fluide (13) est approximativement de la valeur de la moitié, ou bien plus petite que la somme des longueurs des couches de liaison (3) qui appartenant, des deux côtés de la couche résistante (1) dépendante de la température.

3. Dispositif selon la revendication 2, caractérisé en ce que la section de chaque support (2) et de chaque couche de liaison (3) est limitée au voisinage des couches de liaison (3), au moins partiellement par rapport à la section du support (2), dans la zone de la couche résistante (1) dépendante de la température.

4. Dispositif selon la revendication 1, caractérisé en ce qu'une mince couche de verre (16) est prévue entre le support (2) et la couche résistante (1) dépendante de la température, qui est plus courte perpendiculairement au sens de l'écoulement (13), que ne l'est la couche résistante (1) dépendante de la température.

5. Dispositif selon la revendication 1, caractérisé en ce que la couche de verre (5), recouvrant la couche résistante (1) dépendante de la température et les couches de liaison (3) recouvre également partiellement les raccordements électriques (8).

FIG.1

FIG. 2

FIG. 3